(19)

Europäisches
Patentamt
European
Patent Office
Office européen
des brevets

(11) **EP 2 809 041 A1**

(12) **EUROPEAN PATENT APPLICATION**

(43) Date of publication:
**03.12.2014 Bulletin 2014/49**

(51) Int Cl.:
*H04L 29/06* (2006.01)    *G06F 9/54* (2006.01)

(21) Application number: **13305728.1**

(22) Date of filing: **31.05.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Klotsche, Ralf
70435 Stuttgart (DE)**

(74) Representative: **2SPL Patentanwälte PartG mbB
Postfach 15 17 23
80050 München (DE)**

Remarks:
Amended claims in accordance with Rule 137(2)
EPC.

(54) **Method, apparatus and computer program for optimizing a communication characteristic of an application comprising multiple processing components**

(57)    A method for optimizing a communication characteristic of an application (200) comprising a plurality of processing components (202a... 202p; 204a... 204d), each of a select plurality of the processing components exchanging data directly with at least one neighboring of the plurality of processing components via at least one data link uses a representation of the application in which a data link between the processing components of the application (200) is associated to at least one weight factor and determines a statistical property of data exchanged via the at least one data link. An encoder is associated with the select processing component and a corresponding decoder is associated with the at least one neighboring processing component so that an encoded representation of the exchanged data is associated to the at least one data link based upon a determination that the statistical property fulfills a predetermined criterion.

FIG 16

## Description

### Field

Embodiments relate to an apparatus, a method and a computer program for determining a load characteristic of an application comprising multiple processing components, wherein each of the processing components communicates directly with at least one neighboring further processing component via at least one data link.

### Background

Applications comprising multiple processing components are becoming increasingly important. For example in cloud-computing applications, individual processing components may be distributed among several computing nodes or entities. The processing components of such applications may, for example, communicate within a single Personal Computer (PC) over a common backplane of a motherboard, or via an Ethernet or any other type of network interconnecting individual computing nodes or entities when the processing components are hosted by or run on different computing entities. Even when the individual processing components are running on a single Central Processing Unit (CPU), the components may communicate directly with each other, for example by shared memory accesses or the like. Irrespective of the underlying basic technology, how the individual processing components of an application communicate with each other, a communication channel or resource used to transfer data between the processing components is herein generally referred to as a data link.

Having an application comprising a plurality of processing components, it may be beneficial to provide or determine knowledge on load or communication characteristics of the application without knowing details about the semantics of the application and about the interrelation of particular processes which is, for example, available at compile time, or generally speaking, during the composition of a particular application. After the generation or composition of the application this kind of information is typically not or no longer accessible by a host of the application, as for example by a computing entity or PC running the application.

Access to information on a load or communication characteristic of such an application may, however, be desirable to avoid data losses due to overloading of particular computing nodes or entities of the computing network hosting the application in order to be able to eventually reschedule or redistribute processing components to further suitable computing entities.

Therefore, there is a desire to gather information on appropriate characteristics of an application without a-priori knowledge on the semantics of the application or on the interactions of the individual processing components of the application.

### Summary

According to some embodiments, a method for optimizing a communication characteristic of an application comprising a plurality of processing components, each of a select plurality of the processing components exchanging data directly with at least one neighboring of the plurality of processing components via at least one data link uses a representation of the application in which the data link between the processing components of the application is associated to at least one weight factor and determines a statistical property of data exchanged via the at least one data link. An encoder is associated with the select processing component and a corresponding decoder is associated with the at least one neighboring processing component so that an encoded representation of exchanged data is associated to the at least one data link based upon a determination that the statistical property fulfills a predetermined criterion.

Optimizing a communication characteristic of an application may allow incorporating an encoding or compression and a subsequent decoding or decompression of the data exchanged via individual data links without having any detailed knowledge on the type of the data exchanged or even on the application itself. Advantageously, one may determine in a computationally efficient manner without any knowledge on the semantics of the underlying application as to whether the introduction of a compression/decompression between individual processing components may lead to beneficial results. For example, the feasibility of distributing the select processing component and the at least one neighboring processing component to different computing entities without increasing the data rate of external links to an undesirable or unallowable extent may be determined.

According to some embodiments, the statistical property determined is the entropy of the data exchanged between the select processing component and the at least one neighboring processing component, since this property may be determined particularly efficiently, that is, without a high additional computational effort. To this end, the entropy may be measured directly using some arbitrary metric or logic.

According to further embodiments, the entropy is determined by using an encoder performing lossless entropy coding to the data so as to be able to conclude on the entropy based on the reduction of the data rate as achieved by the entropy coder. In some particular examples, the select processing component and the at least one neighboring processing component and the associated data link under observation belong to a common processing pipeline, the processing pipeline corresponding to a subset of serially connected processing components communicating with a data rate relevant for coding. That is, only those data links that belong to a detected or known pipeline are probed or tested for the possibility to beneficially introduce a compression and a subsequent decompression so as to decrease the data rate of the data link or the weight associated to the particular data link.

According to further embodiments, the method further includes transferring either the select processing component or the at least one neighboring processing component from a present computing entity to a further computing entity, the further computing entity communicating with the present computing entity via an external data link. This may be achieved without causing an unacceptably high load on an external data link due to the additionally inserted encoding/decoding corresponding to a compression/decompression. This could else result in an inoperational application or an application having too high latencies to fulfill the desired task.

According to some embodiments, the method is performed based on a representation of the application comprising a matrix, wherein the matrix comprises a row for each processing component and a column for each weight factor associated to a data link, wherein the matrix element for a given row and column is determined by or corresponding to the weight factor when the processing component associated to the given row is communicating via the data link associated to the weight factor of the given column.

**Brief description of the Figures**

Some embodiments of apparatuses or methods will be described in the following by way of example only, and with reference to the accompanying figures, in which

Fig. 1 shows a block diagram of a method for determining a load characteristic;

Fig. 2 shows a possible graphical representation of an application on which some embodiments of the invention may rely;

Fig. 3 shows an illustration of a particular representation of an application together with a matrix which may be utilized to perform computations associated to the representation;

Fig. 4 shows an illustration according to Fig.3 after the association of two processing components to a common virtual processing component;

Fig. 5 shows an illustration according to Fig.3 after the association of further processing components to virtual processing components;

Fig. 6 shows an illustration according to Fig.3 and a configuration where a principally possible association of two processing components to a common virtual processing component is not performed;

Fig. 7 shows an illustration according to Fig.3 and a corresponding representation of the application at the end of a first loop of a creation of virtual processing components;

Fig. 8 shows the illustration of Fig.7 together with a corresponding compacted matrix;

Fig. 9 shows an example for a substitution of multiple weight factors corresponding to a single data link between individual processing components by a common weight factor based on the illustration of Fig. 8;

Fig. 10 shows an illustration according to Fig.2 as a starting point of a method for associating individual processing components to a common pipeline;

Fig. 11 shows an illustration according to Fig.10 and an example for the determination of the pipeline;

Fig. 12 shows the illustration according to Fig.11 and a corresponding matrix after the determination of a complete pipeline;

Fig. 13 shows a method for determining a proposal for a redistribution of processing components or for determining a processing pipeline;

Fig. 14 shows an apparatus for determining a load characteristic of an application;

Fig. 15 shows a representation of an application together with an embodiment for determining a statistical property of data exchanged by at least one data link between a first processing component and a second processing component;

Fig. 16 shows a block diagram of an embodiment of a method for optimizing a communication characteristic of an application; and

Fig. 17 shows an embodiment of an apparatus for optimizing a communication characteristic.

## Detailed Description

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, the elements may be directly connected or coupled or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

For example in cloud computing applications one processing component may be run on one server and a further processing component may be run on another server on the other side of the world so that a data link between the two processing components may even use different technologies, as for example an Ethernet within the site of the one server, fiber channel transmission between the two sites of the servers and again Ethernet within the site of the second server. While an application, as for example such a cloud-computing application, may comprise multiple processing components, a single processing component may not necessarily only perform one specific fundamental (atomic) function or have only one specific functionality. However, in some cases, a single processing component may perform one specific fundamental (atomic) function or have only one specific functionality. One example of such an application may be video processing offered as service to an end user. In a particularly flexible approach, a user may define or build his own application by choosing a particular sequence of basic or atomic functions, i.e. their associated processing components, to define an application to process a video sequence, for example in HD resolution (1920x1080 pixels) and with a frame rate of 30 (30 fps). In one example, a user may choose as a first fundamental function or processing step, i.e. as a first processing component, a flickering and noise filter in order to de-flicker and to de-noise the video images. This first processing component may be followed by a further second processing component implementing a color filter for adjusting color balance so as to achieve, for example, a desired color temperature. The color filtering may be followed by a noise reduction filter, i.e. the corresponding application may further comprise a third processing component receiving (video-) data from the second processing component. This processing may further be followed by background extraction and, in terms of an application, its associated processing component in order to determine persons or images in the foreground. This, in turn, may be followed by a synthesis step (its associated processing component) to merge the extracted foreground with an augmented reality background sequence. A host of an application in that sense can also be a provider which offers, for example, multimedia processing as a service, since the application itself may be built or composed by the user. Hence, knowledge on the details of the application may not be accessible by the host or provider which performs or hosts the actual computations of the application.

The previous example illustrates how one particular application may be composed of multiple processing components so as to provide for a better understanding of the following considerations which are sometimes discussed in more general terms.

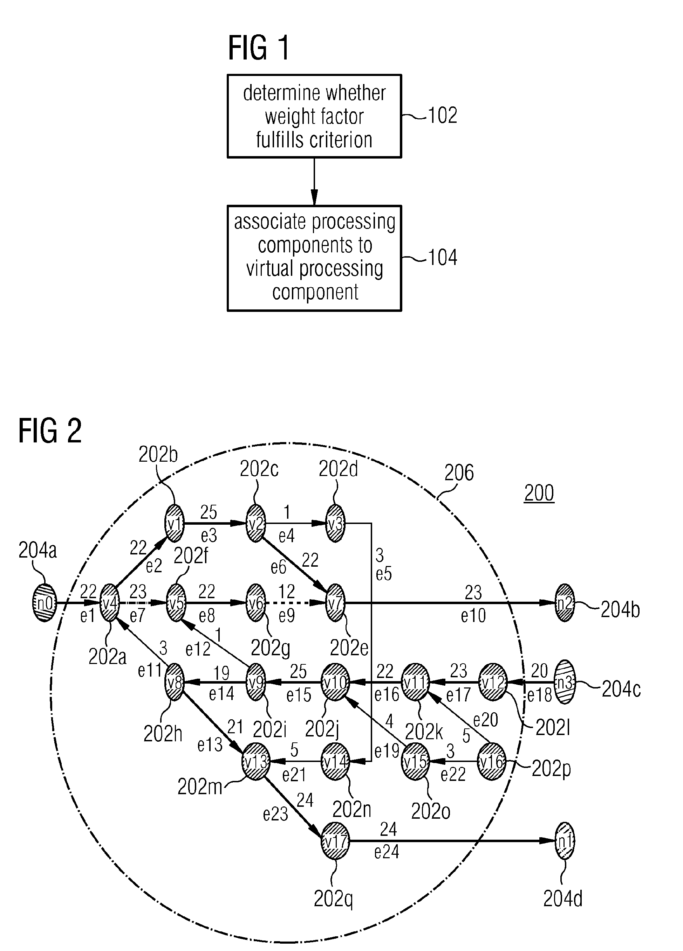

In Fig. 1, a method for determining a load characteristic of an application is illustrated as a flowchart. A particular graphical illustration or representation of such an application is shown in Fig. 2. The application to be analyzed or processed comprises a plurality of processing components, each of a select plurality of the processing components communicating directly with at least one neighboring of the plurality of processing components via at least one data link, wherein the method uses a representation of the application in which a data link between the processing components of the application is represented by at least one weight factor.

In a weight factor analysis step 102, whether the at least one weight factor fulfills a predetermined criterion is determined. In an association step 104, the select processing component and the at least one neighboring processing component are associated to a common entity based upon a determination that the weight factor fulfills the predetermined criterion. According to some specific implementations, the select processing component and the at least one neighboring processing component are associated to the common entity if the weight factor fulfills the predetermined criterion.

In this respect, it should be understood that associating to a common entity does not mean that the present distribution of the processing components among different possible computing entities is changed at this point of the procedure or that the application is changed elsewise. On the contrary, the term associating something to a common entity should be understood to mean that the two processing components may, but do not necessarily have to, be seen as one joint item in an arbitrary representation of the application and with respect to some aspects of the further processing.

Fig. 2 gives one particular example for a possible representation of a distributed application comprising multiple processing components. The illustrated representation may, in mathematical terms, also be seen as graph. While the following embodiments will be explained with respect to the representation illustrated in Fig. 2, it should be noted already beforehand that the particular representation or implementation used to implement the individual embodiments is arbitrary. That is, other practical implementations may utilize other illustrative concepts deviating from graph theory without departing from the scope of the present invention. Therefore, the graphical representation used within the figures may be understood to be a mere illustration enabling a better understanding of the discussed embodiments

A data link between two processing components is associated to at least one weight factor which may be utilized to determine specific characteristics of the application. In this respect, the term weight factor is not meant to be understood as a single scalar quantity only. A weight factor in the understanding as used herein may be any arbitrary quantity, measure or a characteristic which can be associated with a data link and which allows to determine information on the individual data links between the processing components. For example, in further embodiments, vectors of real or complex valued numbers may be used as weight factors. Those may in addition to the load of the data link or the used bandwidth also comprise a measure for further characteristics of the data links, e.g. latency or the like, in order to enable a more detailed analysis of the application if so required.

However, for ease of understanding, the following considerations will assume that the weight factors associated to the data links are real value numbers indicating a load of the particular data link, i.e. a bandwidth required by the exchanged data. That is, a high absolute value of a weight factor may be understood to indicate a high amount of data communicated between the neighboring processing components, i.e. a high bandwidth required on that data link.

Based on those general considerations, Fig. 2 illustrates a particular representation of an application 200 comprising multiple or a plurality of processing components 202a to 202p as well as external processing components 204a to 204d.

For the following considerations it should be assumed that the processing components 202a to 202o are running on a common computing entity 206, while the processing components 204a to 204d are running on or are hosted by neighboring computing entities and are hence communicating with their neighboring processing components 202a, 202e, 2021 and 202p via external data links. Each data link between directly neighboring processing components has associated thereto at least one weight factor indicating the amount of data transferred via that particular data link within a given time interval. The weight factor is illustrated and given in an integer number associated with the particular data link. For example, the data link e4 between the processing component 202c and the neighboring processing component 202d has associated thereto a weight factor of 1. Alternatively, the representation of the application as illustrated in Fig. 2 may also be described in terms of graph-theory, i.e. the representation of Fig. 2 may be interpreted to be a mathematical graph. To this end, the processing components as illustrated in Fig. 2 may also be denoted as vertices while the data links between the individual processing components may also be denoted as edges. According to this terminology, each data link between neighboring processing components has associated thereto an edge having an arbitrary number, while the edges between the processing components are named "e" followed by the individual number of the corresponding edge.

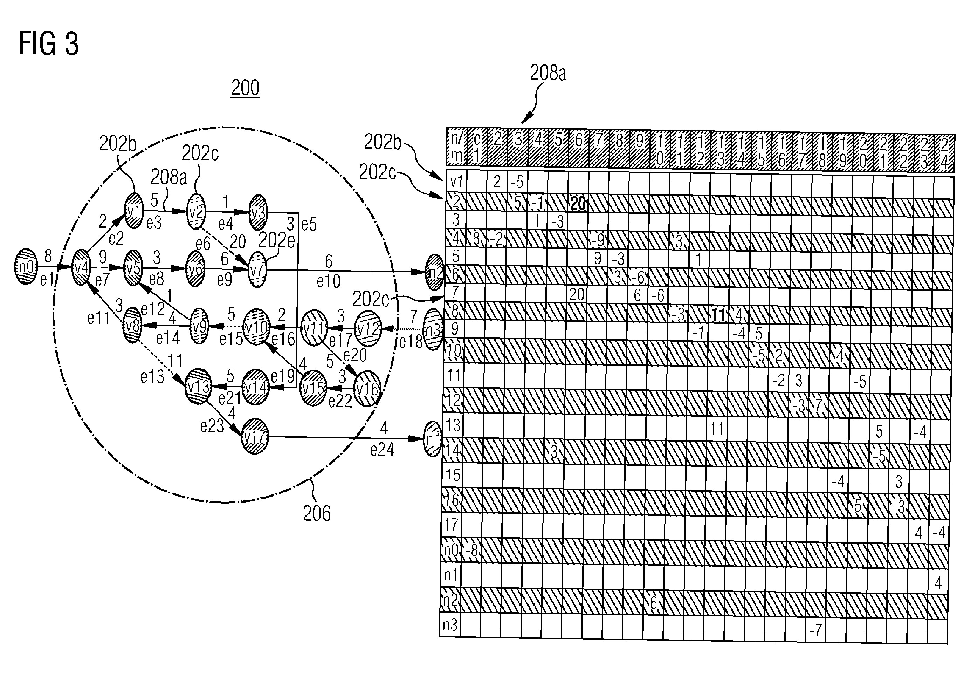

As already indicated above, some embodiments and further methods and concepts will be discussed in the following with respect to the representation as introduced in Fig. 2. In particular, Figs. 3 to 9 illustrate concepts where the processing components are subsequently associated to multiple virtual processing components in order to provide a modified representation or graph of the application in which remaining data links between the resultant virtual processing components have associated thereto a relatively low weight factor.

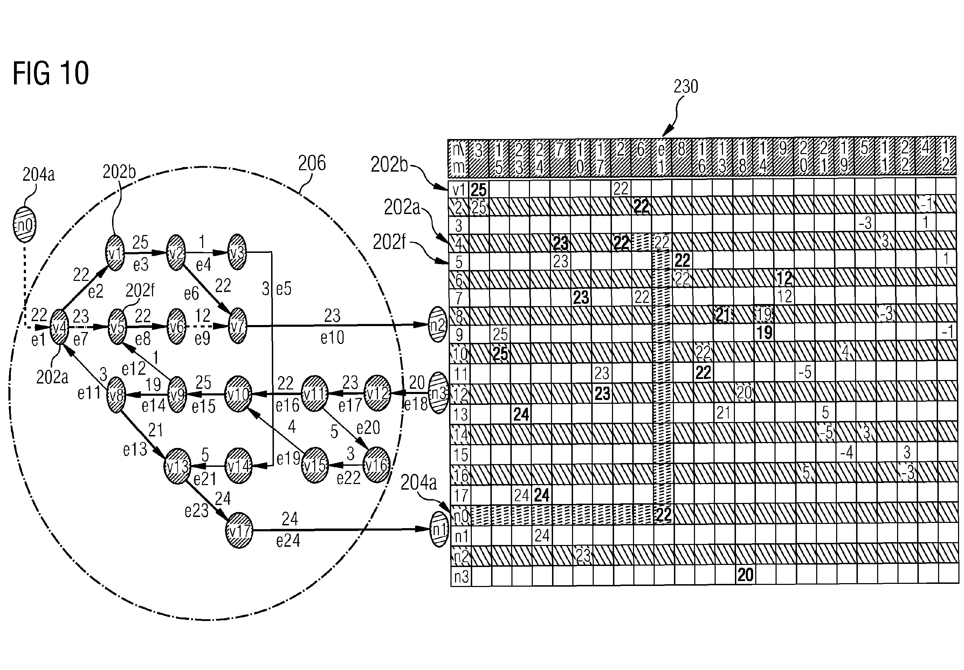

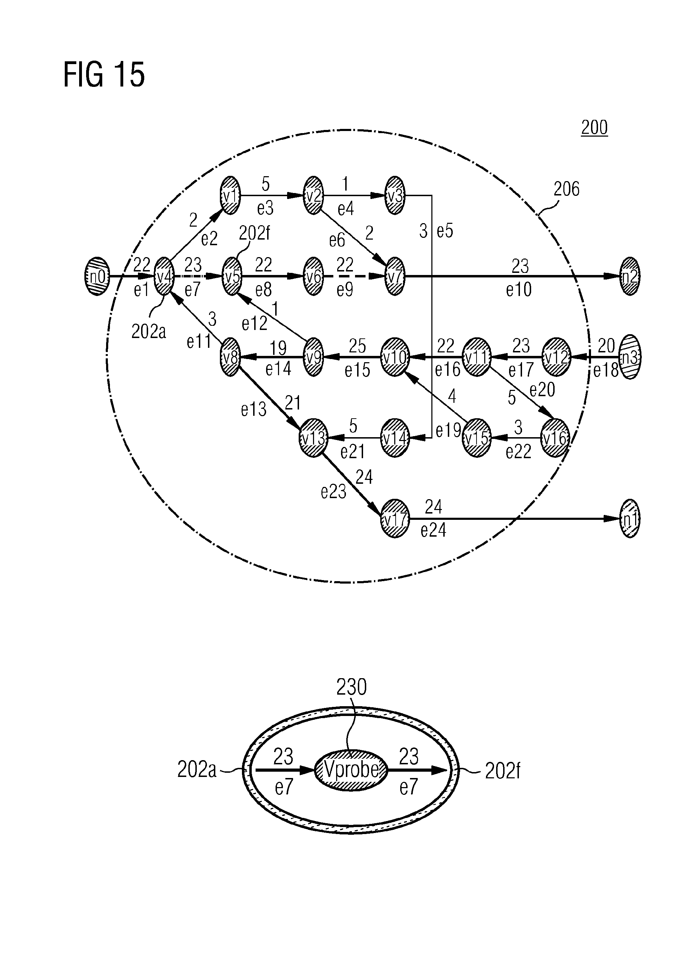

Figs. 10 to 12 illustrate an embodiment according to which the processing components are associated to a common pipeline and Fig. 15 illustrates a further embodiment according to which a communication characteristic of the application is determined which allows to identify appropriate processing components or positions within the graph where the pipeline may be cut so that the neighboring processing components can be distributed to different computing entities without an inappropriate increase of data traffic.

With respect to Figs. 3 to 9 it will be described how some methods allow to provide or determine virtual processing components based on the representation of the application as introduced in Fig. 2 so as to derive candidates, i.e. the virtual processing components, which may in their entirety be shifted to another computing entity without causing additional undesirable high network load.

The application 200 of Fig. 3 generally corresponds to the application as already discussed in Fig. 2. However, for illustrative purposes, the weights associated to the individual data links are different in order to be able to better illustrate the concept of clustering i.e. the generation of virtual processing components. Generally, the following embodiments may serve to arrive at a final representation of the application, the final representation comprising one or more virtual processing components. The one or more virtual processing components of the final representation may serve to decide which processing components should be jointly moved to another processing entity in case the processing power of the processing entity 206 under observation is exceeded.

That is, a goal one may achieve by jointly associating neighboring processing components to a common virtual processing component is to determine clusters of processing components which are jointly associated to one common virtual processing component such that the data links between the so-created virtual processing components have low weights. Hence, all processing components associated to a common virtual processing component may be transferred to a further computing entity without creating high data traffic on external data links.

To this end, a matrix representation of the application 200 or its corresponding graph may be used. While arbitrary other representations may also be used to implement the embodiment of the present invention, the following embodiments will be described using the index-matrix corresponding to the graph-representation of the application. In the index-matrix, each vertex or processing component corresponds to one row of the matrix. That is, for example, processing component 202b corresponds to the first row of the matrix and so on and so forth. Each data link between two neighboring processing components, that is, each weight factor associated to the data link corresponds to one column of the matrix. That is, for example, the data link 208a (edge e3), having associated thereto a weight factor of 5 corresponds to the third column of the matrix. The matrix element for a given row and for a given column is given by or determined from the weight factor when the processing component corresponding to the given row is communicating via the data link associated to the weight of the data link of the given column. That is, for example, the matrix element given by the first row and the third column corresponds to the data link e3 and hence the matrix element has an absolute value of 5 corresponding to the weight factor associated to the particular data link. In order to also be able to determine the direction of a communication between the neighboring processing components, the direction of the communication may be indicated by the sign of the matrix element. For example, if the direction of a communication is from the processing component 202b to the further processing component 202c as in the presently-discussed example, the data flows away from the processing component 202b and the hence sign can be defined to be negative. Of course, this choice is arbitrary and the choice can also be made to the contrary so that the sign indicating a communication away from a particular processing node may also be positive.

The representation of the application 200 may be iteratively tested for neighboring processing components being suitable to be associated to one common entity or to one common virtual processing component. Since may be desirable to group processing components with high data traffic, one particular way to perform this iterative association is to start with the data links having associated thereto the highest weights or with the highest weights. In this particular example, this is data link e6 having associated thereto a weight factor of 20. The processing component 202c and the further processing component 202e are only associated to a common virtual processing component when a predetermined criterion for the weight factor of data link e6 is fulfilled. Since it may be desirable to group the processing components such that an overall data traffic of a final representation of the application 200 is optimized, one particularly suitable criterion is that the association is performed only when the presently-observed weight factor equals or exceeds a sum of absolute values of further weight factors of all further data links of either the processing component or the further processing component.

In other words, final graph $G_i$ may be deconstructed by iteratively substituting partial graphs $G_{subi}$ or neighboring processing nodes by virtual processing components $V_{xi}$ representing them in a Super-graph or in a further or amended representation of the application. When the weight associated to an edge or data link $e_x$ is higher or equal as one of the adjacent vertexes ($V_l$, $V_r$) in- and outgoing bushels ($b^+$, $b^-$) without the data link $e_x$. In this respect a bushel is to be understood as all data links originating from (b⁻ in this particular implementation) or ending (b⁺) at a particular vertex. That is, this criterion is fulfilled when the weight factor of data link $e_x$ equals or exceeds a sum of absolute values of further weight factors of all further data links of the neighboring processing components or vertices.

That is when

$$2e_x \geq b^+_{Vl} + |b^-_{Vl}| \quad v \quad 2e_x \geq b^+_{Vr} + |b^-_{Vr}|; \text{ with}$$
$$b^+_{Vr} = \sum_i \omega(e_i) = V_r \; ; \quad b^-_{Vr} = \sum_i \alpha(e_i) = V_r,$$

the representation may be altered to $G_1 = G_0 \setminus G_{sub1 \cup} V_{x1}$ , or in general for the i-th Iteration: $G_i = G_{i-1} \setminus G_{subi \cup} V_{xi}$.

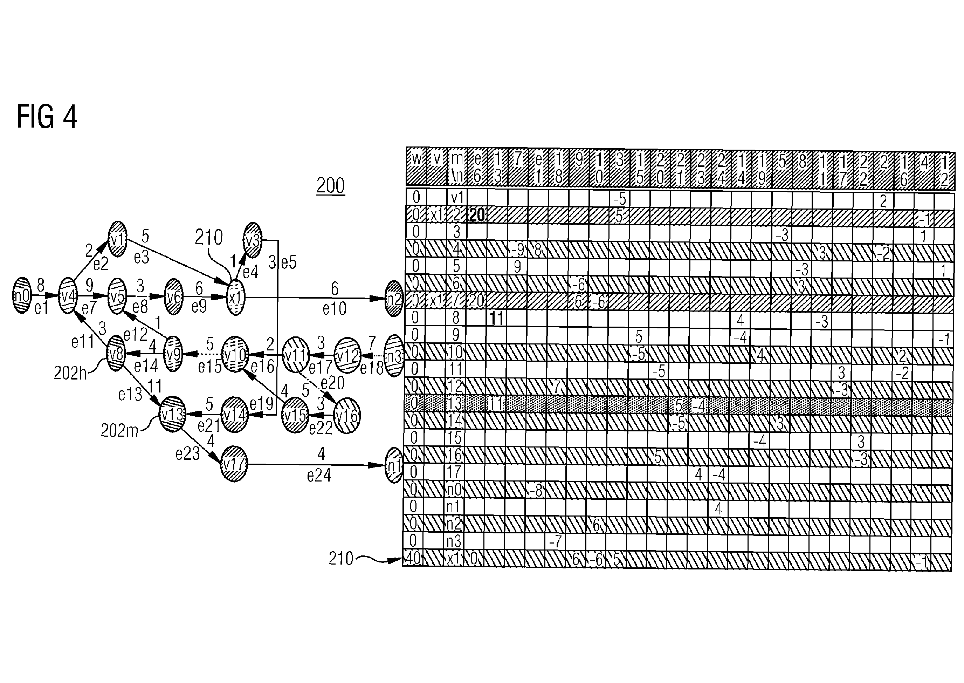

Since the predetermined criterion is fulfilled for, e.g. the processing component 202c and the neighboring processing component 202e, the processing component 202c and the neighboring processing component 202e are associated to a virtual processing component 210, as illustrated in Fig. 4. That is, the processing components 202c and 202e are now jointly represented by virtual processing component 210, which, consequently, has associated therewith data links e3, e9, e4 and e10 formerly associated to one of the two processing components 202c and 202e. The virtual processing component 210 is appended to the matrix as an additional row having matrix elements according to the rules introduced before.

Additionally, one may eventually reorder the matrix columns so as to indicate the data links already processed by their position within the matrix. However, this particular processing is of course not mandatory.

While the method for determining a load characteristic of the application 200 may already end here, since an appropriate set of processing components to be transferred to another computing entity may already be found, further embodiments of the present invention may determine the proposal for a redistribution of the processing components by repeating the above-described observations until a predetermined optimization criterion is fulfilled.

While the presently discussed concept repeats the method until the predetermined criterion for associating neighboring processing components to a common virtual processing component is no longer fulfilled for any of the remaining processing components, further implementations may use another optimization criterion. For example, another optimization criterion may terminate the loop when the present representation of the application does no longer contain a weight factor higher than a predetermined number.

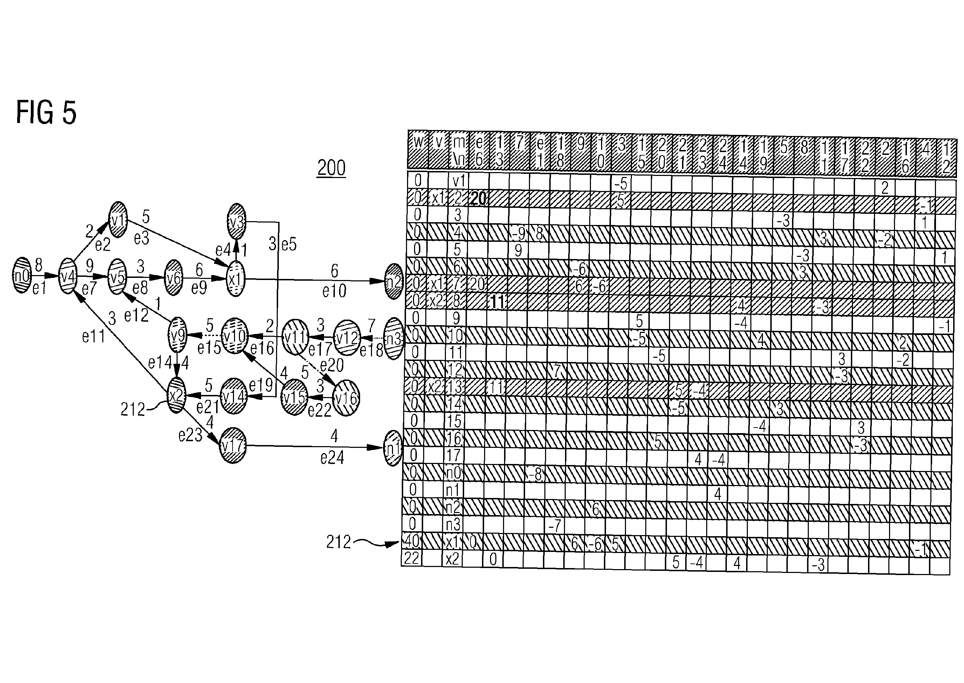

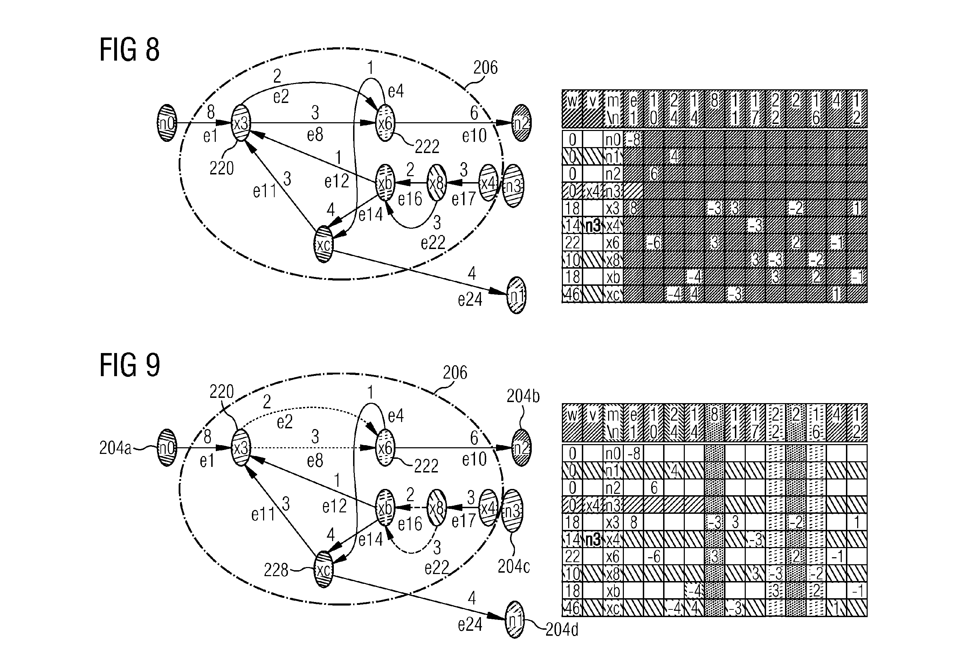

The next repetition assigns the processing components 202h and 202m to a virtual processing component 212, as indicated in Fig. 5. Again, the virtual processing component is treated as a further processing component in that an additional row in the matrix is appended. Since the further data links are considered by applying the same criterion, not all of the processing steps will be illustrated herein until the final result of the method for determining a proposal for a redistribution of processing components, as it is illustrated in Fig. 8 or 9, is determined.

While the method is a repetitive iterative process, it may be noted that also virtual processing components such as provided by one of the preceding processing steps or iterations of the loop may be used as a processing component or as a further processing component in the subsequent steps. That is, also previously determined virtual processing components may be associated to a further virtual processing component in a further iteration of the loop.

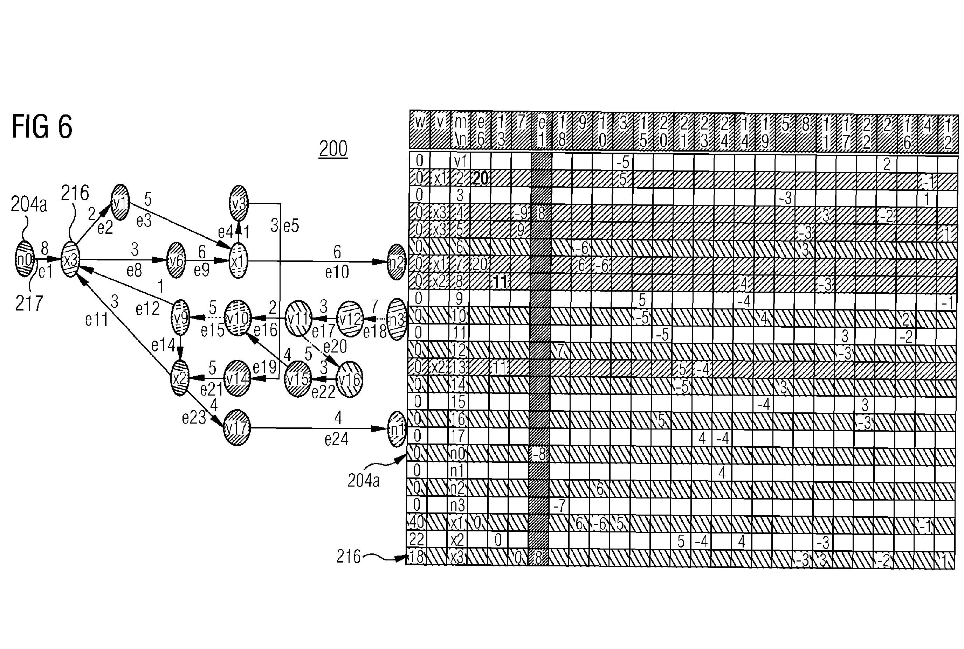

In the iteration illustrated in Fig. 6, a further virtual processing component 216 has been created in one of the preceding steps which is again a potential candidate for further clustering. The next candidate for an association of processing components to a common virtual processing component is data link 217 between the virtual processing component 216 and the external processing component 204a. However, the previously-described predetermined criterion is not fulfilled for data link 217 (edge e1) which has associated thereto a weight factor of 8. Therefore, although being potential candidates, the processing component 204a and the further processing component 216 are not associated to a further virtual processing component. Instead, the data link e1 may be marked as already considered within the loop and the processing may continue with the weight factor of subsequent magnitude or gravity (weigth), that is, for example, the weight factor associated to data link e9.

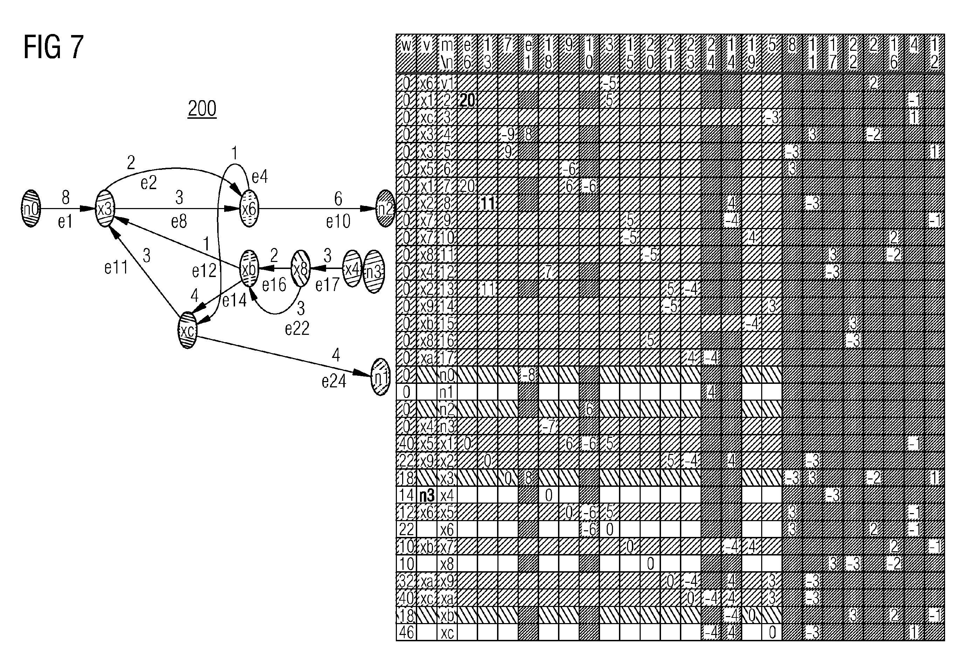

In this particular example, the method is repeated until all of the remaining data links between the processing components or the virtual processing components are marked as being already considered within the matrix, as indicated in Fig. 7. That is, the columns marked as being considered and not changed correspond to the remaining weight factors associating a data link between then directly neighbored processing components or virtual processing components. Hence, a first loop of the method for determining a proposal for a redistribution of processing components may terminate when this result was achieved.

As illustrated in Fig. 8, the very same application 200 may now be represented by a smaller set of processing components or virtual processing components being connected by data links having associated thereto the weight factors as illustrated in the compressed matrix of Fig. 8. While the previously-described processing may result in multiple weight factors being associated to a single data link between two directly neighboring virtual processing components or processing components, further embodiments of the present invention may determine, whether the data link between the select processing component and the neighboring processing component is represented by a weight factor and a further weight factor at a time. For example, the data link between the processing component 220 (x3) and the directly neighboring further processing component 222 (x6) is represented by a weight factor (associated to edge e2) and a further weight factor (associated to edge e8). In order to result with a particularly simple representation, the weight factor and the further weight factor are represented or substituted by a single common weight factor, the common weight factor being determined by summing up the weight factor and the further weight factor, as indicated in the matrix of Fig. 9, where the corresponding weight factors are marked for their combination.

As illustrated, for example in Figs. 8 and 9, at the end of a method for determining a proposal for a redistribution of processing components of the application 200, the remaining processing components 220 to 228 are each substituting a subset of processing components which may, in their entirety, be shifted from the present processing entity 206 to one of the neighboring processing entities hosting already one of the processing components 204a to 204d.

Fig. 10 serves to illustrate, based on the same representation of the application 200, an embodiment where a select processing component and a neighbored processing component are associated to a common processing pipeline, when a predetermined criterion is fulfilled. A processing pipeline is understood to be a subset of serially-connected processing components which communicate with a comparatively high data rate or with a data rate relevant for coding. The motivation in finding pipelines of consecutive processing components which are connected in a serial manner and which communicate with each other with a comparatively high data rate may be similar to the one for trying to provide a final representation of an application having multiple processing components associated to one virtual processing component as discussed before. That is, the determination of pipelines may serve to conclude, where appropriate cuts may be applied so that individual processing components may be shifted to another computing entity without spanning the pipeline via an external data link. In particular, processing components associated to a common pipeline structure might not be clustered or grouped in multiple virtual processing components due to the nature of the serial connection of multiple processing components communicating with a high data rate. Having, however, determined a pipeline or a pipeline structure within an application may allow for further alternative measures of redistribution.

According to some embodiments, a select processing component or a neighboring processing component are associated to a common processing pipeline when the predetermined criterion for the weight factor under observation is fulfilled. According to some embodiments, the predetermined criterion is, for example, fulfilled when the absolute value of the weight factor of the data link exceeds a predetermined threshold which is chosen to be representative of a data rate that may be identified with a data pipeline in the present application or in the present computing scenario. Since the pipeline structure serves to determine pipelines indicating serially-connected processing components which may not be redistributed to different computing entities, the predetermined threshold may be different for different application scenarios. That is, the data rate relevant for coding should be understood to be depending on, for example, the particular data transfer technologies used. For example, when different processing components are interconnected by relatively slow modem- or a wireless LAN (WLAN) interconnects, the data rate relevant for coding may be lower than, for example, for Ethernet connections or the like.

In the particular example illustrated in Figs. 10 to 12, an implementation is chosen where the detection of a pipeline starts at a corner of the graph, i.e., at a processing component associated to a computing node or entity other than the computing entity 206 under consideration.

The following illustrations schematically show a method for determining a processing pipeline which is starting from external processing component 204a.

Using the select processing component 204a as a starting point, the directly neighboring processing component 202a may, for example, be determined by searching the matrix, in particular the column 230 having the weight factor associated to the processing component 204a for its second entry, which is associated to the directly neighbored processing component 202a. The pipeline search may go on by considering all further matrix elements of the same row which correspond to the further data links of the processing component 202a. Once a further matrix element which exceeds the predetermined threshold is detected, the associated further processing component may be considered as being a potential further processing component of the pipeline.

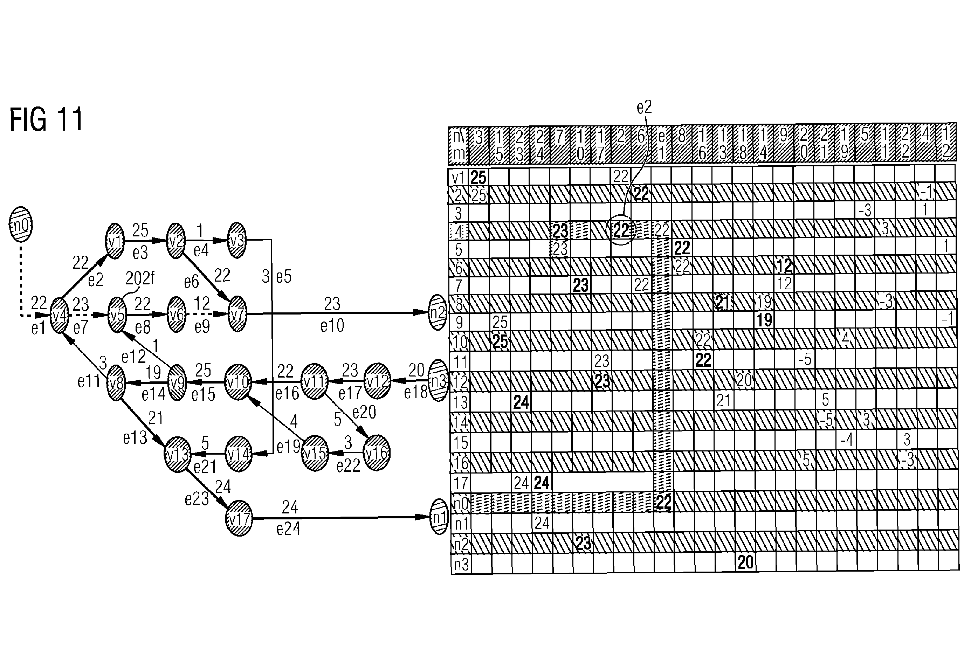

In this particular example, this may be the case for processing component 202b as well as for processing component 202f, both being connected to processing component 202a by data links having a high weight factor. According to the particular implementation, the pipeline search may, in the presence of two possible candidate data links, continue with the data link having associated thereto the higher weight, while the further data link with the lower weight, in the particular example data link e2, may remain as a further candidate. This particular possibility is illustrated in Fig. 11, where the pipeline search is illustrated by marking the matrix elements being believed to be part of the pipeline. The candidate for a further pipeline search (corresponding to data link e2) is also marked for subsequent or further processing.

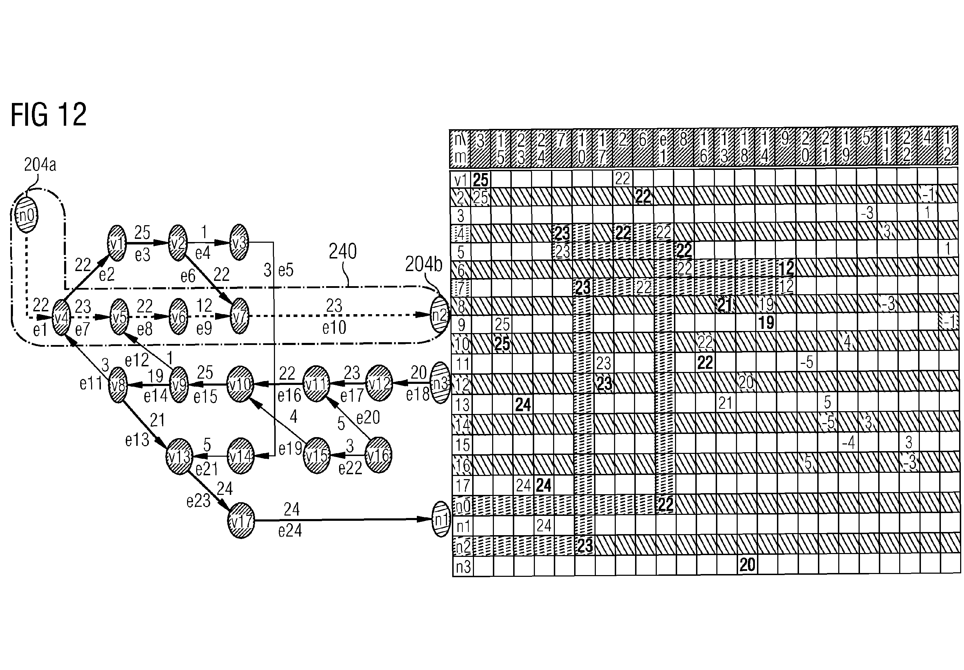

Fig. 12 illustrates one particular outcome of the iterative process, where a complete pipeline 240 between the external processing components 204a and 204b has been determined. One particular choice of ending a pipeline search is when the latest processing component associated to the pipeline is again a further external processing component, as for example external processing component 204b indicated in Fig. 12. That is, in the example illustrated in Fig. 12, the algorithm or the method for determining a processing pipeline has concluded with finding a pipeline connecting both external processing components 204a and 204b.

As further apparent from Fig. 12, by further iterating over the candidate data links marked in the first process loop, further pipelines may be detected by the embodiments, such as the pipelines corresponding to the subset of serially-connected processing components 202a, 202b, 202c, 202e and 204b as well as 204c, 202h, 202k, 202j, 202i, 202h, 202m, 202p and 204d.

Having determined the pipelines within an application, this information may serve to conclude about further load balancing measures in case the processing components cause a too high processor load on the presently-observed computing entity 206. For example, one may conclude that it is hardly feasible to transfer individual subsets of the processing components to a neighboring computing entity when a pipelined structure of the application is determined. However, having determined a pipeline-structure in an application, this may allow to try for a variety of further measures in order to potentially still be able to distribute some of the processing components to a different computing entity.

In summarizing the above embodiments, some embodiments allow to iterate through the graph or a representation of the application from those corners or processing components where heavy edges, i.e. data links with high weight factors emerge from (negative signs in the matrix or for the matrix elements) or where heavy edges or data links arrive (positive signs of the corresponding weigh factors). In either case, a pipeline may be detected until a further corner or external processing component is met where the pipeline ends or starts, that is, where the data traffic heads to or where it emerges from, depending on the direction of search.

In case of occurrence of further data links having associated thereto high weight factors at a particular processing component along a scanned pipeline, these may be marked for subsequent tests to allow for detection of side-pipelines or cross pipelines. Once pipelines are determined for a particular application, and after potentially grouping them into sets, this information may be used for further processing. The particular embodiment illustrated before utilizes the index-matrix composed of vertices or processing components in rows and edges or data links, i.e. the weight factors associated with the individual data links, in columns. In a first step, the columns may be sorted by the edge weight, that is, the columns having the highest matrix elements may be sorted in descending order, starting from column 1 with the highest weights. A first loop may iterate over the external processing components or the corners of the corresponding graph representation, starting another second loop in case the weight factor of one of the data links associated to the external processing components is higher than a given predetermined threshold indicating a pipeline. Depending on the desired direction of search, the association to a pipeline may take place when the matrix element is negative or positive. Since the index matrix contains only two entries per column and since we assume a search for the positive end of the edge, the positive entry in the respective column identifies the next hop or processing component of the pipeline. Beginning from this next hop or the next processing component, a further associated data link is searched, applying the predetermined threshold again. Once identified, the data links associated to this additional processing component are scanned for further data links with weight factors above the threshold and with the desired sign corresponding to the direction of search. If such a further data link exists, the corresponding processing component is marked for a later processing by another loop because it might be a side pipeline.

If said second loop ends at another corner, a complete pipeline is found and the outer, first loop, increments. All vertices (processing components) touched by a pipeline scan successfully are marked. If the loops for an 2+i scan (I e IN, i ≥ 1) meet a marked processing component, they end, while it is important that the outer first loop and all second level loops are executed completely before starting with the 2+i loops.

Embodiments hence may allow the detection of pipelines in applications without any knowledge on the application semantics or the application designer's intents. The so-determined pipeline knowledge on the associated processing components may be used for an optimized resource usage as well as for a development tool showing a designer an analysis of his work for verification or refinements.

Since automated detection of pipelines may be vital for the realization of a platform as a service, for example in a media cloud, embodiments may also have great benefit for emerging cloud-computing applications. For example, some embodiments may be used in cloud-computing applications for multimedia uses, where an application may be provided as a service and where a particular user can compose its own application out of a nearly infinite number of atomic items or individual processing components communicating with each other by their interconnections. When load balancing in such applications shall be performed, i.e. when application graphs or the processing components of such applications shall be mapped on the physical resources of the cloud, a decent level of understanding of the structure of an application may be desired. Embodiments allow to gather this understanding without knowing all details, semantics or implementer's intentions, hence allowing to make the right decisions in terms of load balancing or the decisions which are needed to structure the application graph. For example, some of those applications may contain one or more main paths interconnected by heavy weighted edges or data links in the shape of a pipeline. Pipeline structures may be hard to be clustered for mapping the individual processing components in a beneficial way to alternative computing entities. However, for example, the insertion of a compression-decompression function within a pipeline may nonetheless offer the opportunity to insert a desired light-weighted link in between neighboring processing components. When pipelines are reliably detectable according to some embodiments as described herein, this opens up the possibility to go for such further processing steps in order to still potentially distribute the processing components amongst different computing entities, without rendering the application unusable.

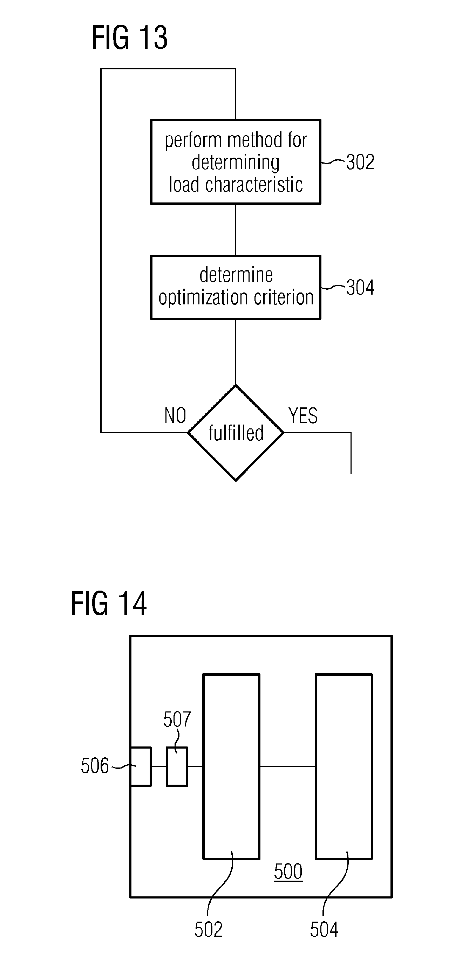

In order to do so, some embodiments as described above are performed within a loop. To this end, Fig. 13 shows a flowchart of an embodiment of a method for determining a processing pipeline or a proposal for a redistribution of processing components, wherein an embodiment of a method for determining a load characteristic of an application as illustrated in Fig. 1 is performed in a loop until a predetermined optimization criterion is fulfilled. That is, a repetition step 302 implementing an embodiment of a method according to Fig. 1 is performed and in a determination step 304 it is determined whether a predetermined optimization criterion is fulfilled. If this is not the case, the method for determining a load characteristic is performed again. If, however, this is the case, the method terminates, resulting with either a proposal for a redistribution of processing components or with a determined processing pipeline.

Fig. 14 shows an apparatus for determining a load characteristic of an application comprising a plurality of processing components, each of a select plurality of the processing component communicating directly with at least one neighboring of the plurality of processing components via at least one data link, the apparatus 500 using a representation of the application in which a data link between the processing components of the application is represented by the at least one weight factor. The apparatus 500 comprises an evaluator 502 which is adapted to determine, whether the at least one weight factor of the data link between the processing component and the at least one further processing component fulfills a predetermined criterion. The apparatus 500 further comprises a representation updater 504, which is adapted to associate the processing component and a neighboring processing component to a common entity, eventually of a higher hierarchical level, based upon the determination that the predetermined criterion is fulfilled. According to further embodiments, the apparatus 500 further comprises an optional input interface 506 adapted to receive information on an amount of data transferred between the multiple processing components as well as an optional weight factor provider 507 adapted to determine the weight factors for the representation based on the information of the amount of data transferred between the processing components of the application. This may, for example, allow to provide the additional functionality as a separate hardware component interacting with a network of computing entities running a particular application 206.

Generally speaking, some embodiments may further use some of the methods or apparatuses disclosed in the previous paragraphs as for example a method for determining a load characteristic of an application comprising a plurality of processing components, each of a select plurality of the processing components communicating directly with at least one neighboring of the plurality of processing components via at least one data link, each data link being represented by at least one weight factor, determine whether the at least one weight factor of the data link between the select processing component and the at least one neighboring processing component fulfills a predetermined criterion. The select processing component and the at least one neighboring processing component are associated to a common entity based upon a determination that the statistical property fulfills a predetermined criterion. According to some embodiments, the select processing component and the at least one neighboring processing component are associated to a common entity if the predetermined criterion is fulfilled. This may hence be possible without any knowledge on the semantics of the application, by just observing predetermined criteria of the application at run time. Those embodiments may, for example, allow to gather information about the load characteristic of the application and to utilize the information by jointly associating processing components to a common entity so as to enable that they may be treated in a like manner when the distribution of the processing components of the application amongst available computing entities is to be rescheduled.

According to some further embodiments, the select processing component and the at least one neighboring processing component are associated to a processing pipeline, the processing pipeline corresponding to a subset of the processing components of the application, the subset having serially-connected processing components communicating with a data rate relevant for coding. According to some of those embodiments, the predetermined criterion for the weight factor may be fulfilled if an absolute value of the weight factor of the data link exceeds a predetermined threshold. Those embodiments may allow determining a processing pipeline within an application. A processing pipeline may be understood as a subset of processing components which communicate with each other in a serial fashion due to the underlying applications structure and with a data rata that is significant with respect to some application specific characteristic. Once a pipeline of multiple processing components is determined, one may, for example, conclude whether it may be appropriate or even beneficial to distribute the processing components of the pipeline amongst different computing nodes or not.

According to further embodiments, the determination of the processing pipeline may also consider a direction of a data flow between the processing components by also considering a sign of the weight factor, so that the predetermined criterion causing the association of a particular processing component to a pipeline is only fulfilled when the weight factor has a predetermined sign which corresponds to a desired direction of a search for the pipeline.

According to further embodiments, a processing component is only associated to a pipeline when the observed weight factor corresponds to a data link between processing components from which one processing component already belongs to the pipeline. That is, the predetermined criterion is fulfilled only when either the select processing component or the at least one neighboring processing component is already associated to the processing pipeline. This may allow for a sequential search for a pipeline starting from a predetermined starting point, as for example from a processing component which is known to be executed or run by another computing node or entity than the entity presently under observation.

According to further embodiments, the select processing component and the at least one neighboring processing component are jointly associated to a virtual processing component which serves as a joint representation of both individual functionalities of the select processing component and the at least one neighboring processing component. That is, two or more individual processing components may be associated with one virtual processing component, which may also be denoted as clustering. This may, for example, allow to represent multiple processing components communicating with high data rates by one virtual processing component so as to, for example, indicate, that it may be undesirable to reschedule or distribute the processing component of one particular virtual processing component to different computing nodes or entities, since this may cause high network loads due to the high data rate communication between the individual processing components of the virtual processing component.

In embodiments, where a high weight factor corresponds to a high data rate according to some arbitrary metric, the predetermined criterion for an association to a virtual processing component may be fulfilled when the absolute value of the weight factor associated to a data link between the select processing component and the at least one neighboring processing component presently under observation equals or exceeds a sum of absolute values of further weight factors of all further data links of either the processing component or the further processing component. That is, the association to a common virtual processing component may be performed, when the weights associated with the data links of the resulting virtual processing component do not result with data links having, in their entirety, a higher weight than the weight factor between the select processing component and the at least one neighboring processing component. This may, for example, allow to iteratively consider all processing components of an application, so as to represent them by multiple virtual processing components while at the same time achieving a net decrease in the flow of data in the resultant representation of the application. This may hence reduce the sum of weight factors or the amount of data traffic between the resultant processing components or virtual processing components.

According to further embodiments, select processing components or processing components and further or neighboring processing components are iteratively associated to virtual processing components until a predetermined optimization criterion is fulfilled, so as to be able to provide a final representation of the application which allows, based on the determined load characteristics, load redistribution decisions or the like.

Further embodiments, therefore, comprise transferring all processing components associated to a virtual processing component from their present computing entity to a further computing entity which communicates with the present computing entity via an external data link. This may allow redistributing processing components in terms of load balancing or the like without causing an undesirable additional network load for the network connecting the two computing entities, which, in turn, may result in a failure or overload of the application.

Likewise, according to a further embodiment, a processing pipeline may be determined by repeated association of processing components presently under observation to a pipeline. Determination of a pipeline may, for example, indicate that it may be undesirable to distribute the processing components associated to one common pipeline to different computing entities, since the associated increase in network load of the external data link of a lower data rate may, in turn, cause latency or failure of the whole application. In that sense, an external data link may be understood to be a link between different computing entities while a data link may be understood to be a data link within a particular computing entity. A computing entity may, for example, be a single CPU, a single PC, a single Computing Cluster or Server farm or the like.

As already mentioned above, having identified a particular pipeline within an application, one may, for example, try to find an appropriate processing component where the pipeline can be cut by inserting an encoder in order to encode the corresponding data, which is exchanged with the directly neighboring processing component of the pipeline. According to some embodiments, this is achieved by a method for optimizing a communication characteristic of an application comprising a plurality of processing components, each of a select plurality of the processing components exchanging data directly with at least one neighboring of the plurality of processing component by at least one data link, the method using a representation of the application in which a data link between the processing components of the application is associated to the at least one weight factor, wherein a statistical property of the data exchanged by the at least one data link is determined. An encoder is associated with the select processing component and a corresponding decoder is associated with the at least one neighboring processing component so that an encoded or compressed representation of the data may decrease the amount of data transferred via the data link, i.e. decrease the weight associated to the particular data link.

Fig. 15 shows one particular embodiment, as to how this may be achieved, by observing the data link e7 between the select processing component 202a and the at least one neighboring processing component 202f. When the statistical property of the data exchanged via the particular data link fulfills the predetermined criterion, it may be beneficial to introduce an encoder before the data is transmitted via the observed data link, in particular when the statistical property indicates that an encoder may achieve a significant compression of the data exchanged.

To this end, the statistical property as observed may, for example, be an entropy of data. Determining an entropy may indicate without a high computational effort, if the insertion of any kind of compression technique or encoder, such as for example an entropy encoder, may provide for a high compression ratio so that the weight factor associated to the data link can be significantly decreased or not when encoding or compression is performed prior to the transmission. In particular, a conventional entropy encoder may be used to determine the statistical property, so that one may choose amongst various implementations according to the particular needs and requirements. For example, such encoders may be chosen to determine the statistical property which consume only low additional computational power so as to be able to probe the application without causing an additional load to the computing entity hosting the application presently under observation. For the actual compression, however, other encoders or compressors may be used which may achieve higher compression ratios than the encoders used for the determination of the statistical property.

According to further embodiments, the predetermined criterion is only fulfilled when the select processing component and the at least one neighboring processing component are associated to a common processing pipeline, which may have been determined beforehand or known to be present for other reasons.

This may provide for the possibility of distributing a particular subset of processing components from the presently-observed computing entity 206 to a further neighboring computing entity although the characteristics of the application 200 presently under observation is per se not suitable for a redistribution of individual processing components. However, when embodiments provide for the possibility to apply an encoder (compressor) and a decoder (decompressor) within one particular data link in an appropriate manner, a data link having a significantly reduced amount of data to transfer may be generated so as to allow to cut the pipeline or to distribute the processing components communicating via the particular data link to different computing entities due to a reduced data traffic caused by the insertion of the appropriate encoder/decoder pair.

It is to be noted again that when the statistical property of the data exchanged via the data link may be determined by one particular encoder this does not necessarily mean that the pair of encoder and decoder used for the finally compression of the data exchanged via the particular data link is of the same type as the encoder used for probing. To this end, it should be understood that also different types of encoders may be used to determine the statistical property of the data exchanged via the data links along, for example, a particular processing pipeline. For example, the frequently or even permanently performed probing may use an encoder requiring a low processing power which is enough to determine whether compression at the presently observed data link is beneficial while the actual compression may use another an encoder requiring a higher processing power in order to achieve the desirable result.

In other words, one may insert into detected or known pipelines iteratively at each edge or data link a probe with the ability to measure the entropy in the data signal for an arbitrary given media type. After iteration at each data link there is a value available additionally to the edges weight facto, which indicates the entropy of the signal flowing through it. This entropy might be used to make a decision where to cut the pipeline and insert a compression and decompression function with a light weighted edge or data link in between. The decision making itself may be a separate process balancing the compression gain, available link bandwidth and local (or even remote) computation power.

As compared to static solutions (at compile time at least before instantiation) which needs preplanned action of the application developer requiring knowledge about the execution environment, which should be hidden by the platform, this may allow to draw the respective conclusions without such a-priori knowledge.

The following practical example of a multimedia application shall again serve for a better understanding of the embodiments described herein. As a prerequisite, a multimedia application in a cloud shall be supposed to be composed of processing components which may be represented by a graph spread over various physical resources or computing entities. Typically, these graph representations show pipelines of single media traversing the entire graph. (or a sub-graph which is foreseen to be distributed on several resources.) This media pipelines often show a massive flow of data, so a compression- decompression function may be beneficial when a segment of such a pipeline shall traverse a network (e.g. for an optimized use of resources). One issue is to find the right location for a cut and insertion of the compression- and decompression function as the data rate and type 'seen' from outside may be the same on each data link of a pipeline (e.g. HD video, 30fps.). The right placement of the cut is related to the expected efficiency of the inserted compression function. This is the point where some embodiments may unfold their benefit.

Considering, for example, a given Media Cloud application with a graph or representation like the one given in Fig. 10 with one or more pipelines detected and the pipeline between n0 and n2 shall be investigated to find a place for a cut, then a probe is inserted iteratively (or several at once) into each data link of the pipeline (n0, e1, v4, e7, v5, e8, v6, e9, v7, e10, n2). Compared to real signal processing the algorithm for signal entropy detection can be much easier and even ignore the internal data representation or format. Just as example for RGB video, the least significant bits may be nulled to suppress noise and then analyzed for repetitive objects like e.g. the zip algorithm.

Assume that the pipeline in the example graph from n0 to n2 shall be a chain of functions for video preprocessing and all data links or edges carry HD video quality with 30fps. The processing components may perform the following operations:

N0: raw, flickering, and noisy video;
V4: Color balance, white adjust
V5: Noise reduction
V6: Background extraction (virtual green box)
V7: Augmented reality background synthesis
N2: conferencing portal video input.

Although all data links contain the same type of media, e9 between v6 and v7 will have the lowest entropy in this particular example, because most of each video frame is expected to be constantly green with a single person moving. At this location in the application graph a compression would achieve the best results.

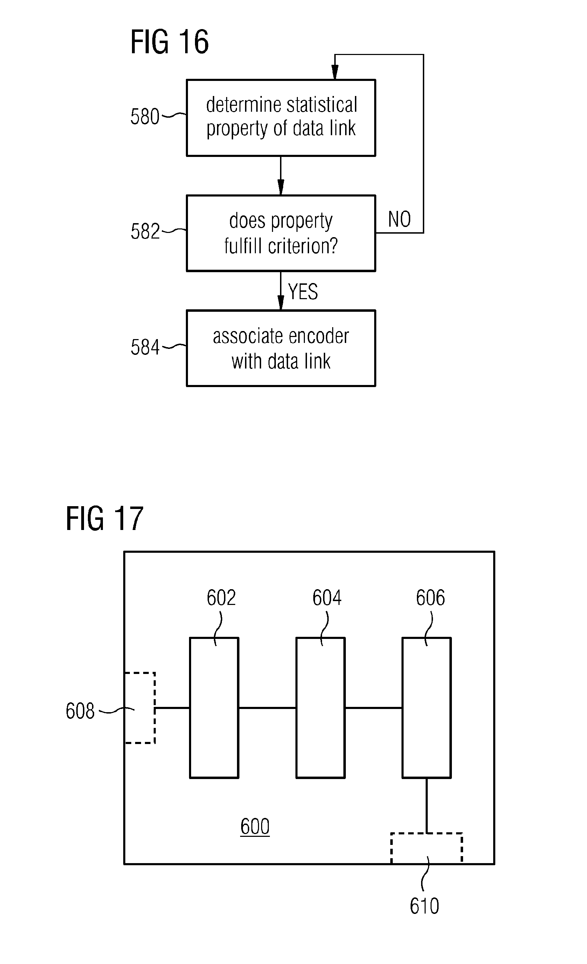

Fig. 16 illustrates an embodiment of a method for optimizing a communication characteristic of an application comprising a plurality of processing components, each of a select plurality of the processing components exchanging data directly with at least one neighboring of the plurality of processing components via at least one data link, the method using a representation of the application in which a data link between the processing components of the application is represented by at least one weight factor, as a flow chart.

In a determination step 580, a statistical property of data exchanged via the at least one data link is determined.

In an evaluation step 582 it is determined whether the statistical property fulfills a predetermined criterion; and

In an association step 584 an encoder is associated with the select processing component and a corresponding decoder is associated with the at least one neighboring processing component so that an encoded representation of the exchanged data is associated with the at least one data link based upon a determination that the statistical property fulfills a predetermined criterion. In some embodiments, each of a select plurality may correspond to each of the plurality of the processing components.

Fig. 17 shows an embodiment of an apparatus for optimizing a communication characteristic of an application comprising a plurality of processing components schematically. The apparatus 600 comprises an analyzer 602 adapted to determine a statistical property of data exchanged via the at least one data link and an evaluator 604 adapted to determine whether the statistical property fulfills a predetermined criterion.

A load distributor 606 is adapted to associate an encoder with the select processing component and a corresponding decoder with the at least one neighboring processing component so that an encoded representation of the exchanged data is associated to the at least one data link based upon a determination that the statistical property fulfills a predetermined criterion.. According to further embodiments, the apparatus 600 further comprises an input interface 608 adapted to receive information on the statistical property of data exchanged via the data links between the multiple processing components of an application, so as to eventually enable a particular hardware to be distributed independently from the computing entities running the actual application 206.

According to further embodiments, the apparatus 600 also comprises an optional output interface 610 adapted to provide a configuration signal, the configuration signal being adapted to associate an encoder to the processing component such that data exchanged by the processing component is encoded so that an encoded representation of the data is exchanged via the at least one data link.

That is, an additional hardware component or software component may be employed in order to gather additionally-required information so as to be able to perform load balancing or the redistribution of processing components of an application in an appropriate manner.

While in the foregoing paragraphs embodiments have mainly been discussed with respect to media or multimedia/video applications performed in a distributed way within an arbitrary network of computing entities, further application scenarios for other embodiments are numerous. In particular, every distributed computing scenario may benefit greatly from embodiments as described herein. This may be the case for modem telecommunications networks, such as for example Long Term Evolution (LTE) mobile networks, where it is also a desire to distribute the processing load over the entire network in an efficient manner, so as to save energy and resource costs, for example by avoiding obsolete and redundant hardware. Further embodiments may be utilized to enable load sharing or load balancing decisions in data analysis networks, where individual data analysis processes are distributed over multiple computing nodes distributed over the whole world and connected to each other via the internet or similar networks or the like. Further embodiments may also be used in computing farms in order to distribute the load within the computing farm and to benefit to the maximum possible extent from the available computational power without overloading the network or the like. Generally speaking, further embodiments may be utilized in any kind of application where multiple processing components work together in a joint application and where it may be desirable to dynamically redistribute the individual processing components onto different computing entities, processes, computing farms, or the like.

Embodiments may further provide a computer program having a program code for performing one of the above methods, when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Functional blocks denoted as "means for ..." (performing a certain function) shall be understood as functional blocks comprising circuitry that is configured to perform a certain function, respectively. Hence, a "means for s.th." may as well be understood as a "means configured to or suited for s.th.". A means configured to perform a certain function does, hence, not imply that such means necessarily is performing the function (at a given time instant).

Functions of various elements shown in the figures, including any functional blocks labeled as "means", "means for providing a sensor signal", "means for generating a transmit signal.", etc., may be provided through the use of dedicated hardware, such as "a signal provider", "a signal processing unit", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods.

Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

**Claims**

1.　A method for optimizing a communication characteristic of an application (200) comprising a plurality of processing components (202a... 202p; 204a... 204d), each of a select plurality of the processing components exchanging data directly with at least one neighboring of the plurality of processing components via at least one data link, the method using a representation of the application in which a data link between the processing components of the application (200) is associated to at least one weight factor, comprising:

> determining a statistical property of data exchanged via the at least one data link; and
> associating an encoder with the select processing component and a corresponding decoder with the at least one neighboring processing component so that an encoded representation of the exchanged data is associated to the at least one data link based upon a determination that the statistical property fulfills a predetermined criterion.

2. The method of claim 1, wherein the predetermined criterion is fulfilled when the weight factor exceeds a predetermined threshold.

3. The method of claim 1, wherein the statistical property is an entropy of the data.

4. The method of claim 1, wherein the statistical property is determined using an encoder performing lossless entropy coding.

5. The method of claim 1, wherein the statistical property is determined using an encoder performing at least one coding technique of the group of coding techniques comprising Arithmetic Coding; Golomb Coding, Huffman Coding; Lempel-Ziv and Run Length Coding.

6. The method of claim 1, wherein the predetermined criterion is fulfilled only when the select processing component and the at least one neighboring processing component are associated to a processing pipeline (240), the processing pipeline (240) corresponding to a subset of serially connected processing components (204a, 202a, 202f, 202g, 202e, 204b) communicating with a data rate relevant for coding.

7. The method of claim 1, further comprising:

> transferring at least one of the select processing component and the at least one neighboring processing component from a present computing entity to a further computing entity, the further computing entity communicating with the present computing entity via an external data link.

8. The method of claim 1, further comprising: determining a processing pipeline, the processing pipeline corresponding to a subset of serially connected processing components communicating with a data rate relevant for coding, the determining comprising:

> determining whether the at least one weight factor of the data link between the select processing component and the at least one neighboring processing component fulfills a predetermined pipeline criterion; and
> associating the select processing component and the at least one neighboring processing component to the common pipeline when the predetermined pipeline criterion is fulfilled.

9. The method of claim 8, wherein a direction of a communication between the select processing component and the at least one neighboring processing component is given by a sign of the weight factor, and wherein the predetermined pipeline criterion is fulfilled only when the weight factor has a predetermined sign, the predetermined sign corresponding to a desired direction of a search.

10. The method of claim 8, wherein the predetermined criterion is fulfilled when an absolute value of the weight factor of the data link exceeds a predetermined threshold.

11. An apparatus for optimizing a communication characteristic of an application (200) comprising a plurality of processing components, each of a select plurality of the processing components exchanging data directly with at least one neighboring of the plurality of processing components via at least one data link, the apparatus using a representation of the application in which a data link between the processing components of the application is represented by at least one weight factor, comprising:

> an analyzer (602) adapted to determine a statistical property of data exchanged via the at least one data link;
> an evaluator (604) adapted to determine whether the statistical property fulfills a predetermined criterion; and
> a load distributor (606) adapted to associate an encoder with the select processing component and a corresponding decoder with the at least one neighboring processing component so that an encoded representation of the exchanged data is associated to the at least one data link based upon the determination that the predetermined criterion is fulfilled.

12. The apparatus of claim 11, further comprising an input interface (608) adapted to receive an information on the statistical property of data exchanged via the data links between the plurality of processing components of the application.

13. The apparatus of claim 11, further comprising an output interface (610) adapted to provide a configuration signal, the configuration signal adapted to associate an encoder to the select processing component such that data exchanged by the select processing component is encoded so that an encoded representation of the data is exchanged via the at least one data link.

14. The apparatus of claim 13, further comprising a coding parameter generator operable to determine an encoder and decoder configuration to be used based on the received statistical property of the exchanged data.

15. A non-transitory computer-readable storage medium storing instructions which, when executed by a computer, cause the computer to perform a method for optimizing a communication characteristic of an application (200) comprising a plurality of processing components (202a... 202p; 204a... 204d), each of a select plurality of the processing components exchanging data directly with at least one neighboring of the plurality of processing components via at least one data link, the method using a representation of the application in which a data link between the processing components of the application (200) is associated to at least one weight factor, the method comprising:

determining a statistical property of data exchanged via the at least one data link; and
associating an encoder with the select processing component and a corresponding decoder with the at least one other processing component so that an encoded representation of the exchanged data is associated to the at least one data link based upon a determination that the statistical property fulfills a predetermined criterion.

**Amended claims in accordance with Rule 137(2) EPC.**

**1.** A method for optimizing a communication characteristic of an application (200) comprising a plurality of processing components (202a... 202p; 204a... 204d), each of a select plurality of the processing components exchanging data directly with at least one neighboring of the plurality of processing components via at least one data link, the method using a representation of the application in which a data link between the processing components of the application (200) is associated to at least one weight factor, comprising:

determining a statistical property of data exchanged via the at least one data link; and
associating an encoder with the select processing component and a corresponding decoder with the at least one neighboring processing component so that an encoded representation of the exchanged data is associated to the at least one data link based upon a determination that the statistical property fulfills a predetermined criterion.

**2.** The method of claim 1, wherein the predetermined criterion is fulfilled when also the weight factor exceeds a predetermined threshold.

**3.** The method of claim 1, wherein the statistical property is an entropy of the data.

**4.** The method of claim 1, wherein the statistical property is determined using an encoder performing lossless entropy coding.

**5.** The method of claim 1, wherein the statistical property is determined using an encoder performing at least one coding technique of the group of coding techniques comprising Arithmetic Coding; Golomb Coding, Huffman Coding; Lempel-Ziv and Run Length Coding.

**6.** The method of claim 1, wherein the predetermined criterion is fulfilled only when the select processing component and the at least one neighboring processing component are associated to a processing pipeline (240), the processing pipeline (240) corresponding to a subset of serially connected processing components (204a, 202a, 202f, 202g, 202e, 204b) communicating with a data rate relevant for coding.

**7.** The method of claim 1, further comprising:

transferring at least one of the select processing component and the at least one neighboring processing component from a present computing entity to a further computing entity, the further computing entity communicating with the present computing entity via an external data link.

**8.** The method of claim 1, further comprising: determining a processing pipeline, the processing pipeline corresponding to a subset of serially connected processing components communicating with a data rate relevant for coding, the determining comprising:

determining whether the at least one weight factor of the data link between the select processing component and the at least one neighboring processing component fulfills a predetermined pipeline criterion; and associating the select processing component and the at least one neighboring processing component to the common pipeline when the predetermined pipeline criterion is fulfilled.

**9.** The method of claim 8, wherein a direction of a communication between the select processing component and the at least one neighboring processing component is given by a sign of the weight factor, and wherein the predetermined pipeline criterion is fulfilled only when the weight factor has a predetermined sign.

**10.** The method of claim 8, wherein the predetermined criterion is fulfilled when an absolute value of the weight factor of the data link exceeds a predetermined threshold.

**11.** An apparatus for optimizing a communication characteristic of an application (200) comprising a plurality of processing components, each of a select plurality of the processing components exchanging data directly with at least one neighboring of the plurality of processing components via at least one data link, the apparatus using a representation of the application in which a data link between the processing components of the application is represented by at least one weight factor, comprising:

an analyzer (602) adapted to determine a statistical property of data exchanged via the at least one data link; an evaluator (604) adapted to determine whether the statistical property fulfills a predetermined criterion; and a load distributor (606) adapted to associate an encoder with the select processing component and a corresponding decoder with the at least one neighboring processing component so that an encoded representation of the exchanged data is associated to the at least one data link based upon the determination that the predetermined criterion is fulfilled.

**12.** The apparatus of claim 11, further comprising an input interface (608) adapted to receive an information on the statistical property of data exchanged via the data links between the plurality of processing components of the application.

**13.** The apparatus of claim 11, further comprising an output interface (610) adapted to provide a configuration signal, the configuration signal adapted to associate an encoder to the select processing component such that data exchanged by the select processing component is encoded so that an encoded representation of the data is exchanged via the at least one data link.

**14.** The apparatus of claim 13, further comprising a coding parameter generator operable to determine an encoder and decoder configuration to be used based on the received statistical property of the exchanged data.

**15.** A non-transitory computer-readable storage medium storing instructions which, when executed by a computer, cause the computer to perform a method for optimizing a communication characteristic of an application (200) comprising a plurality of processing components (202a... 202p; 204a... 204d), each of a select plurality of the processing components exchanging data directly with at least one neighboring of the plurality of processing components via at least one data link, the method using a representation of the application in which a data link between the processing components of the application (200) is associated to at least one weight factor, the method comprising:

determining a statistical property of data exchanged via the at least one data link; and associating an encoder with the select processing component and a corresponding decoder with the at least one other processing component so that an encoded representation of the exchanged data is associated to the at least one data link based upon a determination that the statistical property fulfills a predetermined criterion.

# FIG 1

```
determine whether
weight factor        ~102
fulfills criterion
```

↓

```
associate processing
components to
virtual processing    ~104
component
```

# FIG 2

# FIG 3

200

208a

202b
202c
208a
202e

202b
202c
202e

206

EP 2 809 041 A1

FIG 4

FIG 5

FIG 6

EP 2 809 041 A1

EP 2 809 041 A1

FIG 7

200

FIG 8

FIG 9

FIG 10

FIG 11

# FIG 12

204a

v1 —25→ v2 —1→ v3
e3      e4

22 e2          e6  22      3 e5

240

204b

22 e1  v4  23 e7  v5 —22→ v6 —12→ v7   23 e10 → n2
                  e8      e9

n0

3 e11  v8  19 e14  v9  25 e15  v10  22 e16  v11  23 e17  v12  20 e18 → n3
       1 e12

21 e13

v13  5 e21  v14   e19   v15  3 e22  v16
                  4           5 e20

24 e23  v17  24 e24 → n1

EP 2 809 041 A1

FIG 13

perform method for
determining
load characteristic —302

determine
optimization criterion —304

NO     YES

fulfilled

FIG 14

507

506

500

502      504

FIG 15

EP 2 809 041 A1

## FIG 16

## FIG 17

30

# EP 2 809 041 A1

Europäisches Patentamt
European Patent Office
Office européen des brevets

## EUROPEAN SEARCH REPORT

Application Number

EP 13 30 5728

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/031545 A1 (CHOUDHURY ANAMITRA R [US] ET AL) 31 January 2013 (2013-01-31) * abstract * * paragraph [0037] - paragraph [0055] * * paragraph [0056] - paragraph [0059]; figure 1 * * paragraph [0060] - paragraph [0062]; figure 2 * * paragraph [0063] - paragraph [0065]; figure 3 * ----- | 1-15 | INV. H04L29/06 G06F9/54 |
| Y | US 2007/104113 A1 (MEGA CATALDO [DE] ET AL) 10 May 2007 (2007-05-10) * abstract * * paragraph [0007] * * paragraph [0028] * ----- | 1-15 | |
| A | US 2012/137018 A1 (UHLIG VOLKMAR [US] ET AL) 31 May 2012 (2012-05-31) * abstract * * paragraph [0043]; figure 4 * ----- | 1-15 | TECHNICAL FIELDS SEARCHED (IPC) G06F H03M H04L |

The present search report has been drawn up for all claims

| Place of search | Date of completion of the search | Examiner |
|---|---|---|
| The Hague | 20 November 2013 | Wiltink, Jan Gerhard |

EPO FORM 1503 03.82 (P04C01)

**ANNEX TO THE EUROPEAN SEARCH REPORT
ON EUROPEAN PATENT APPLICATION NO.**                    EP 13 30 5728

This annex lists the patent family members relating to the patent documents cited in  the above-mentioned European search report.
The members are as contained in the European Patent Office EDP file on
The European Patent Office is in no way liable for these particulars which are merely given for the purpose of information.

20-11-2013

| Patent document cited in search report | | Publication date | Patent family member(s) | | Publication date |
|---|---|---|---|---|---|
| US  2013031545 | A1 | 31-01-2013 | US | 2013031545  A1 | 31-01-2013 |
|  |  |  | US | 2013031550  A1 | 31-01-2013 |
| US  2007104113 | A1 | 10-05-2007 | CN | 1968254  A | 23-05-2007 |
|  |  |  | KR | 20070049961  A | 14-05-2007 |
|  |  |  | US | 2007104113  A1 | 10-05-2007 |
|  |  |  | US | 2007104118  A1 | 10-05-2007 |
| US  2012137018 | A1 | 31-05-2012 | US | 2012137018  A1 | 31-05-2012 |
|  |  |  | US | 2012137164  A1 | 31-05-2012 |

EPO FORM P0459

For more details about this annex : see Official Journal of the European Patent Office, No. 12/82